# EUROPÄISCHE PATENTSCHRIFT

(11) **EP 0 579 270 B1**
(45) Veröffentlichungstag und Bekanntmachung des Hinweises auf die Patenterteilung: **05.06.1996**
(21) Anmeldenummer: 93113908.3
(22) Anmeldetag: 12.09.1991
(51) Int. Cl.: F24H 9/12, F24D 3/10

(54) **Sanitär- und Heizungsrohrsystem, vollständig oder überwiegend bestehend aus Kunststoff**
Pipe system for sanitary and heating systems, entirely or predominantly made of plastic
Réseau d'alimentation pour installations sanitaires ou de chauffage, constitué complètement ou principalement de matière plastique

(30) Priorität: 10.05.1991 DE 9105824 U; 15.11.1990 DE 9015675 U; 10.05.1991 DE 9105823 U; 24.04.1991 DE 9105038 U; 26.04.1991 DE 9105171 U
(43) Veröffentlichungstag der Anmeldung: 19.01.1994
(62) Teilanmeldung aus: 91115490.4
(73) Patentinhaber: RAFELD KUNSTSTOFFTECHNIK GmbH & Co. KG, 87640 Ebenhofen (DE)
(72) Erfinder: Rafeld, Karl, D-87640 Ebenhofen (DE)
(74) Vertreter: Kern, Wolfgang, Dipl.-Ing.

(56) Entgegenhaltungen:
- WO-A-89/07224
- DE-A- 2 723 556
- DE-U- 7 422 566

## Beschreibung

Die Erfindung bezieht sich auf ein Sanitär- und Heizungsrohrsystem, vollständig oder überwiegend bestehend aus Kunststoff, insbesondere Polypropylen, für die Wasserversorgung, mit Übergangsstücken zur Heizkörperanbindung in Räumen, insbesondere zur duch die Fußbodenleiste verdeckten Verlegung der Heizungsrohre.

Bei der Ausstattung von bestehenden Gebäuden, insbesondere Altbauten mit Zentralheizung, wird im Rahmen der Altbausanierung oftmals aus kosten- und bautechnischen Gründen die Verlegung der Heizungsrohre unter Putz vermieden. Die Heizungsrohre werden vielmehr hinter der Fußleiste und von dieser verdeckt angeordnet, wobei der Warmwasservorlauf und der Warmwasserrücklauf übereinander längs der Raumwand verlegt werden. Der Anschluß der Heizkörper an derart verlegte Heizungsrohre geschieht in diesen Fällen mittels Übergangsstücken, die den Warmwasservorlaufund -rücklauf der Heizkörper mit den entsprechenden Rohren verbinden.

Aus der DE-A-27 23 556 ist ein Sanitär- und Heizungsrohrsystem bekannt, bei dem der untere Rohrquerschnitt durch ein Übergangsstück, das den oberen Rohrquerschnitt zentrisch durchdringt, mit dem Anschlußstück verbunden ist. Um für das obere Rohrstück trotz der zentrischen Durchdringung den benötigten Querschnitt für die Durchströmung aufrechtzuerhalten, ist der Querschnitt des oberen Rohrstücks im Bereich der Durchdringung erweitert, so daß die Wandstärke in diesem Bereich geringer als in den sich daran anschließenden Bereichen ausgebildet ist. Eine derartige Ausbildung des Sanitär- und Heizungsrohrsystems kann hinsichtlich der Festigkeits- und Beanspruchungsgrenzen nachteilig sein, da im Bereich des Verbindungsstücks der Wandquerschnitt geringere Kräfle als in dem übrigen Bereich aufnehmen kann. Daraus folgt, daß letzlich zumindest in den übrigen Bereichen eine größere Wandstärke der Rohrstücke vorzusehen ist. Dies ist aber mit erhöhten Herstellungskosten und mit einem erhöhten Gewicht des Systems verbunden.

Aus der WO 89/07 224 ist ein Sanitär- und Heizungsrohrsystem bekannt, bei dem der Überbrückungskanal ebenfalls zentrisch das obere Rohrstück durchdringt. Um in diesem Fall für das obere Rohrstück den benötigten Querschnitt aufrechtzuerhalten, weist das Gehäuse im Überbrückungsquerschnitt eine Aussparung auf. Die Aussparung wird nach außen hin durch das Gehäuse begrenzt. Damit ist zusätzlich zu den Rohrstücken ein die Rohrstücke umgebendes Gehäuse erforderlich, so daß dieses Rohrsystem zumindest im Überbrückungsbereich einen größeren Gesamtquerschnitt aufweist.

Bei dem aus der DE-U-74 22 566 bekannten Sanitär- und Heizungsrohrsystem ist das obere Rohrstück durch ein Überschubrohr hindurchgeführt und mit diesem verschweißt. Der ringförmige Hohlraum des Überschubrohrs ist mit dem unteren Rohrstück und mit dem Heizungswasseranschluß verbunden. Dieses System hat im Bereich der Überbrückung einen vergrößerten Gesamtquerschnitt, so daß dieser im Bereich des oberen Rohrstücks größer als der Umriß des unteren Rohrstücks ist.

Der Erfindung liegt die Aufgabe zugrunde, ein Sanitär- und Heizungsrohrsystem der eingangs erwähnten Art zu schaffen, bei dem ein ausreichender Strömungsdurchsatz ohne eine Gesamtquerschnittserweiterung des Systems erreicht werden kann.

Diese Aufgabe wird erfindungsgemäß durch ein Sanitär- und Heizungsrohrsystem mit den Merkmalen des Patentanspruchs 1 gelöst.

Durch die erfindungsgemäß vorgeschlagene außermittige Anordnung des Überbrückungskanals ist unter Beibehaltung der Außengeometrie der Strömungsquerschnitt des oberen Rohrstücks am Überbrückungskanal im Vergleich zur zentrischen Anordnung vergrößert, da der Verlust an Strömungsquerschnitt durch Verschiebung des Überbrückungskanals zum Rand hin überkompensiert wird durch einen Gewinn an Strömungsquerschnitt auf der gegenüberliegenden, zur Rohrmitte hin verschobenen Seite des Überbrückungskanals.

Vorteilhafte Weiterbildungen sind Gegenstand der Unteransprüche.

Die Erfindung wird nachfolgend an Hand des in der Zeichnung dargestellten Ausführungsbeispiels näher erläutert. In der Zeichnung zeigen:
- Fig. 1: eine Längsschnittansicht des Übergangsstücks;
- Fig. 2: eine Draufsicht des Übergangsstücks von Fig. 1;

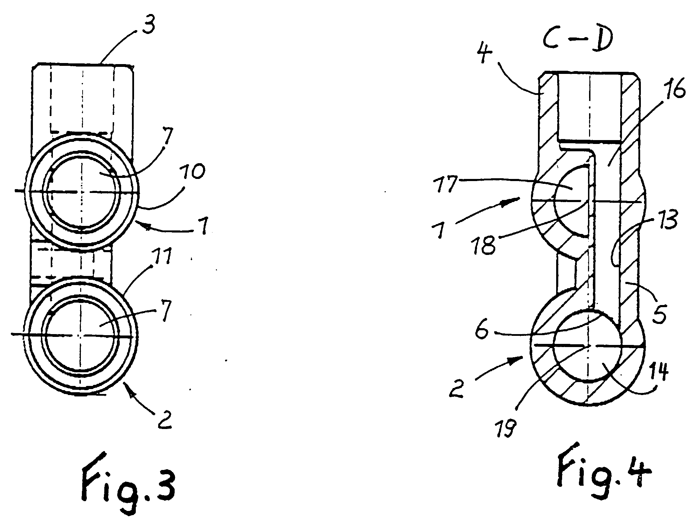

- Fig. 3: eine Seitenansicht des Übergangsstücks von Fig. 1,
- Fig. 4: eine Schnittansicht des Übergangsstücks von Fig. 1 längs der Linie C-D in Fig. 1;
- Fig. 5: eine der Fig. 1 vergleichbare, jedoch ungeschnittene Ansicht des Übergangsstücks mit eingeschweißten, geraden Rohrverbindungsstücken; und
- Fig. 6: eine der Fig. 1 vergleichbare, jedoch ungeschnittene Ansicht des Übergangsstücks mit eingeschweißten, gekrümmten Rohrverbindungsstücken.

Das in den Zeichnungsfiguren dargestellte Übergangsstück besteht aus Kunststoff, zweckmäßigerweise Polypropylen, und weist die beiden übereinander angeordneten Rohrstücke 1, 2 auf, welche zum Anschluß eines Heizkörpers dienen und zu diesem Zweck über mit dem oberen Rohrstück 1 ein einteiliges Ganzes bildende Anschlußstutzen 3, 4 an den Heizungswasservorlauf bzw. -rücklauf eines solchen Heizkörpers angeschlossen sind.

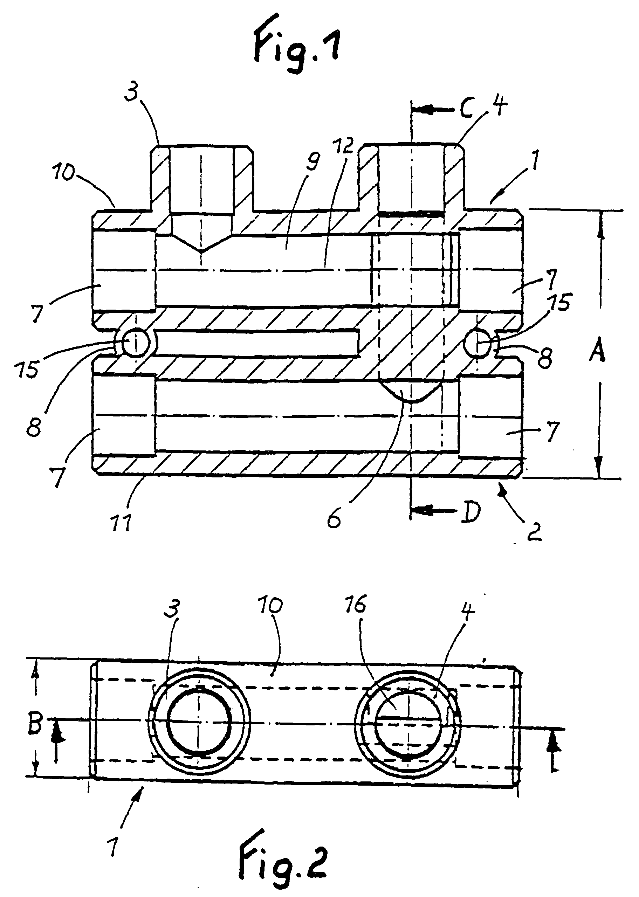

Damit die beiden Heizungsrohre für den Vorlauf und den Rücklauf hinter der Fußbodenleiste desjenigen Raumes, der mit einer Zentralheizung ausgerüstet werden soll, und damit sichtverdeckt angeordnet werden können, muß das Übergangsstück, das in die Heizungsrohre über die endseitigen Anschlußmuffen 7 eingebaut wird, einen möglichst geringen Raum einnehmen. Dies bedeutet, daß die Gesamthöhe A (Fig. 1) des Übergangsstücks ohne Anschlußstutzen 3, 4 nicht höher sein darf als die Fußleiste und daß seine Gesamttiefe B (Fig. 2) möglichst klein sein muß, damit der Wandabstand zur Fußleiste nicht zu groß wird.

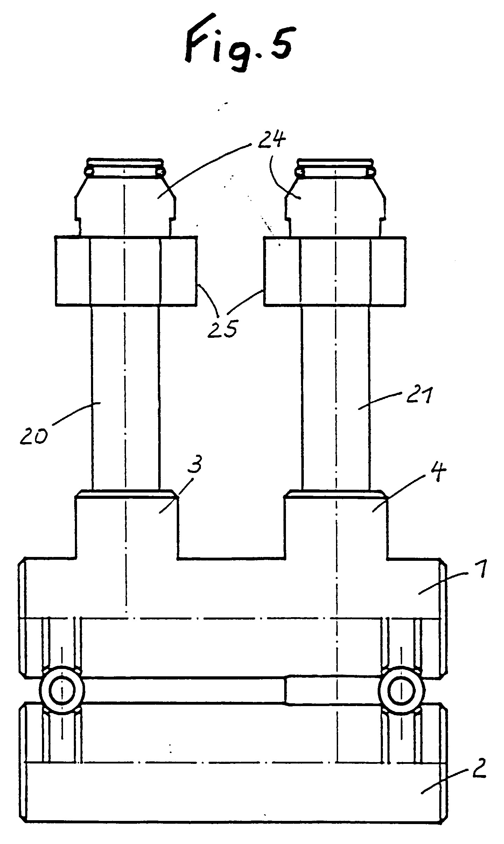

Zu diesem Zweck sind die beiden Rohrstücke 1, 2 in geringem Abstand voneinander angeordnet und über Verbindungsstücke 8 miteinander verbunden, welche mit Durchgangsbohrungen 15 zur Aufnahme von Schrauben versehen sind, mit denen das Ubergangsstück an der Wandung festgeschraubt werden kann. Dazu kommt, daß der eine Anschlußstutzen 4 den Querschnitt 9 des oberen Rohrstücks 1 innerhalb des Umrisses 10 dieses Rohrstücks durch einen Überbrückungskanal 5 überbrückt, der in das untere Rohrstück 2 innerhalb des Umrisses 11 desselben einmündet, wie bei 6 in den Fig. 1 und 4 ersichtlich ist.

Diese Überbrückung des Vorlaufs bzw. Rücklaufs innerhalb des Übergangsstücks vermeidet, daß die Gesamttiefe B den Außendruchmesser jedes Rohrstücks 1, 2 überschreitet.

Die lichte Weite 16 des Überbrückungskanals 5 kann etwa den halben Durchflußquerschnitt 17 des oberen Rohrstücks 1 einnehmen. Der Überbrückungskanal 5 verläuft zweckmäßigerweise lotrecht zur Längsachse 12 des Rohrstücks 1, könnte jedoch erforderlichenfalls auch jeden anderen geeigneten Verlauf nehmen.

Der Überbrückungskanal 5 erhält in bezug auf den Querschnitt der Rohrstücke 1, 2 eine außermittige Anordnung, wie aus den Fig. 2 und 4 ersichtlich ist. Aus letzterer ergibt sich auch, daß die den Querschnittsmittelpunkten 18, 19 der Rohrstücke 1, 2 abgewandte Außenwand 13 des Überbrückungskanals 5 etwa tangential zum Querschnitt 14 des unteren Rohrstücks 2 verläuft und in dieses über die gemeinsame Schnittkante 6 einmündet.

Die Anschlußstutzen 3, 4 an dem einen der beiden übereinander angeordneten Rohrstücke 1, 2, die für den Heizungswasservorlauf bzw. -rücklauf verwendet werden, können, wie aus Fig. 5 ersichtlich, mit geraden Rohrverbindungsstücken 20, 21 verschweißt sein, an deren freien Enden 24 sich Überwurfmuttern 25 für den Anschluß an Heizkörperventilen befinden.

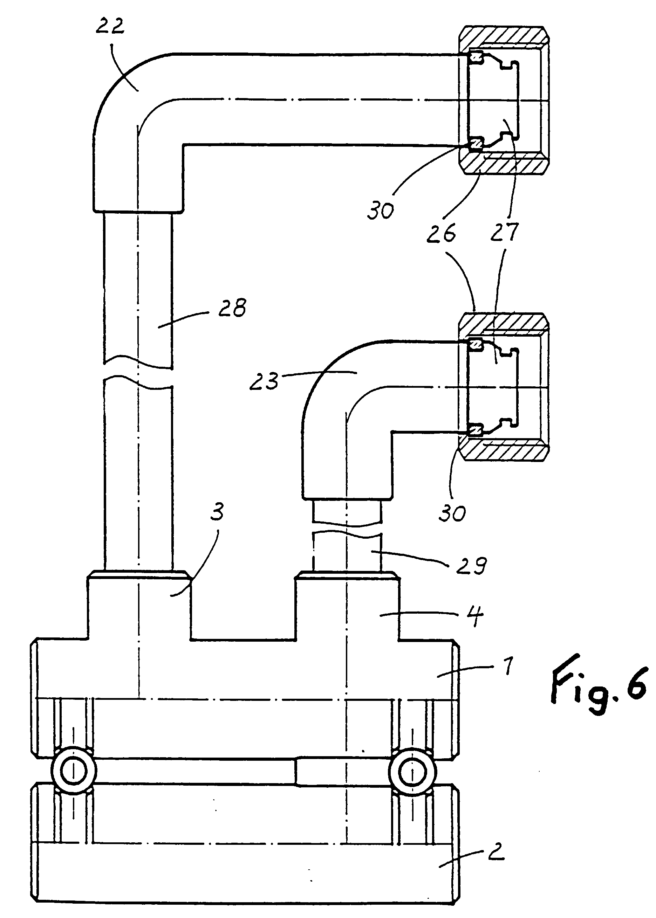

Eine vergleichbare Konstruktion ist in Fig. 6 dargestellt, nur daß hier das Übergangsstück, das auch mit Doppel-T-Abzweiger bezeichnet werden könnte, mit gekrümmten Rohrverbindungsstücken 22, 23 verschweißt ist, und zwar entsprechend dem gewünschten Höhenabstand dieser Rohrverbindungsstücke unter Zwischenschaltung von geraden Rohrstücken 28, 29. Die Enden 27 der gekrümmten Rohrverbindungsstücke sind wiederum mit Überwurfmuttern 26 für den Ventilanschluß ausgestattet, die mittels Sicherungsringen 30 auf den Enden 27 gehalten sind.

## Patentansprüche

1. Sanitär- und Heizungsrohrsystem, vollständig oder überwiegend bestehend aus Kunststoff, insbesondere Polypropylen, für die Wasserversorgung, mit Übergangsstücken zur Heizkörperanbindung in Räumen, insbesondere zur durch die Fußbodenleiste verdeckten Verlegung der Heizungsrohre,
bestehend aus zwei dem Verlauf der Fußbodenleiste folgenden, miteinander verbundenen Rohrstücken (1, 2),
wobei das eine an den Heizungswasservorlauf und das andere an den Heizungswasserrücklauf anschließbar ist, die beiden Rohrstücke (1, 2) übereinander angeordnet sind und das obere Rohrstück (1) beide Anschlußstutzen (3, 4) für den Heizungswasservorlauf und -rücklauf aufweist, von denen der eine Anschlußstutzen (4) den Querschnitt (9) des oberen Rohrstücks (1) innerhalb des Umrisses (10) dieses Rohrstücks durch einen Überbrückungskanal (5) überbrückt, der in das untere Rohrstück (2) innerhalb des Umrisses (11) desselben einmündet,
wobei weiterhin der Überbrückungskanal (5) in bezug auf den Querschnitt (17, 14) der Rohrstücke (1, 2) außermittig angeordnet ist und
die den Querschnittsmittelpunkten (18, 19) der Rohrstücke (1, 2) abgewandte Außenwand (13) des Überbrückungskanals (5) etwa tangential zum Querschnitt (14) des unteren Rohrstücks (2) verläuft und in diesen einmündet.

2. System nach Anspruch 1, **dadurch gekennzeichnet,** daß der Überbrückungskanal (5) lediglich in einer Querschnittshälfte der Rohrstücke (1, 2) angeordnet ist.

3. System nach Anspruch 1 oder 2, **dadurch gekennzeichnet,** daß die lichte Weite (16) des Überbrückungskanals (5) etwa den halben Durchflußquerschnitt (17) des oberen Rohrstücks (1) einnimmt.

## Claims

1. Pipe system for sanitary and heating purposes, entirely or predominantly made of plastic material, especially polypropylen, for water supply purpose, including reducers for connecting radiators in rooms, especially for installation of the heating pipes so as to be conceiled by a skirting board, consisting of two interconnected pipe pieces (1, 2) which follow the extension of the skirting board and of which one of the pipe piece is connectable to the heating water flow and the other one is connectable to the heating water return, comprising that the two pipe pieces (1, 2) are disposed one above the other and the upper pipe piece (1) includes the two pipe unions (3, 4) for the heating water flow and return, of which the one pipe union (4) bridges the cross section (9) of the upper pipe piece (1) inside the contour (10) of said pipe piece by means of a bridging passageway (5) which opens into the lower pipe piece (2) inside the contour (11) thereof, so that moreover the bridging passageway (5) adapts an off-center position relative to the cross section (17, 14) of the pipe pieces (1, 2), and the outer wall (13) of the bridging passageway (5), which is remote from the cross sectional centers (18, 19) of the pipe pieces (1, 2) extends approximately tangentially to the cross section (14) of the lower pipe piece (2) and opens into the same.

2. System according to claim 1, **characterized in that** the bridging passageway (5) is located only within one half of the cross section ofthe pipe pieces (1, 2).

3. System according to claim 1 or 2, **characterized in that** the clear width (16) of the bridging passageway (5) occupies approximately half the flow cross section of the upper pipe piece (1).

## Revendications

1. Système de conduites d'alimentation en eau d'installations sanitaires ou de chauffage constitué complètement ou principalement de matière plastique, en particulier de polypropylène, pourvu de pièces de jonction pour le raccordement aux éléments de chauffage dans des pièces, en particulier pour la pose cachée par la plinthe de conduites de chauffage,
composé de deux tronçons de conduite (1, 2) suivant le cours de la plinthe et reliés entre eux,
l'un d'entre eux pouvant être raccordé à l'arrivée d'eau chaude et l'autre au retour d'eau chaude, les deux tronçons de conduite (1, 2) étant disposés l'un au-dessus de l'autre et le tronçon de conduite supérieur (1) présentant les deux raccords (3, 4) pour l'arrivée et le retour d'eau chaude dont un raccord (4) contourne la section (9) du tronçon de conduite supérieur (1) à l'intérieur de la périphérie (10) de ce tronçon de conduite par un conduit de contournement (5) qui débouche dans le tronçon de conduite inférieur à l'intérieur de la périphérie (11) de ce dernier,
le conduit de contournement (5) étant de plus disposé excentré par rapport à la section (17, 14) des tronçons de conduite (1, 2) et
la paroi extérieure (13) du conduit de contournement (5) opposée aux centres des sections (18, 19) des tronçons de conduites (1, 2) s'étendant sensiblement tangentiellement à la section (14) du tronçon de conduite inférieur (2) et débouchant dans celui-ci.

2. Système selon la revendication 1, caractérisé en ce que le conduit de contournement (5) est disposé uniquement dans une moitié de section des tronçons de conduite (1, 2). 3. Système selon la revendication 1 ou 2, caractérisé en ce que la largeur intérieure (16) du conduit de contournement (5) occupe environ la moitié de la section de passage (17) du tronçon de conduite supérieur (1).
